# EUROPEAN PATENT SPECIFICATION

(11) **EP 2 909 687 B1**
(45) Date of publication and mention of the grant of the patent: **01.03.2017**
(21) Application number: 13780376.3
(22) Date of filing: 15.10.2013
(51) Int. Cl.: G05B 23/02, G06F 11/36

(54) **SYSTEM TESTING ALGORITHM AND APPARATUS**
SYSTEMTESTALGORITHMUS UND VORRICHTUNG DAMIT
ALGORITHME ET APPAREIL D'ESSAI DE SYSTÈME

(30) Priority: 16.10.2012 GB 201218549
(43) Date of publication of application: 26.08.2015
(73) Proprietor: BAE SYSTEMS plc, London SW1Y 5AD (GB)
(72) Inventor: ANSELL, Darren, William, Preston Lancashire PR4 1AX (GB)
(74) Representative: BAE SYSTEMS plc Group IP Department
(86) International application number: PCT/GB2013/052681
(87) International publication number: WO 2014/060735

(56) References cited:
- WO-A1-2010/069587
- LAST M ET AL: "Effective Black-Box Testing with Genetic Algorithms", LECTURE NOTES IN COMPUTER SCIENCE/COMPUTATIONAL SCIENCE > (EUROCRYPT )CHES 2002, SPRINGER, DE , 3 March 2006 (2006-03-03), pages 134-148, XP002573214, ISBN: 978-3-540-24128-7 Retrieved from the Internet: URL:http://www.springerlink.com/content/w3 16n3854q861050/fulltext.pdf [retrieved on 2010-03-11]
- FENG TINGTING ET AL: "Research on software testing technique of airborne equipment based on airworthiness", PROCEDIA ENGINEERING, vol. 17, 1 January 2011 (2011-01-01), pages 489-496, XP55099587, ISSN: 1877-7058, DOI: 10.1016/j.proeng.2011.10.059
- CHANGSUN YOO ET AL: "ADS-B HILS test for collision avoidance of Smart UAV", DIGITAL COMMUNICATIONS - ENHANCED SURVEILLANCE OF AIRCRAFT AND VEHICLES (TIWDC/ESAV), 2011 TYRRHENIAN INTERNATIONAL WORKSHOP ON, IEEE, 12 September 2011 (2011-09-12), pages 253-257, XP032065934, ISBN: 978-1-4244-9841-3

## Description

### FIELD OF THE INVENTION

The present invention relates to determining deficiencies of systems.

### BACKGROUND

It is desirable to be able to discover any design defects present in avionic/aircraft software and systems. The finding and analysis of such design defects tends to allow for a better understanding of the capabilities and limitations of the software and systems. Also, it tends to facilitate the design of better avionic/aircraft software and systems.

Typically, when testing a black box (or white box) system, a tester stimulates inputs to the system in order to observe the behaviour of the outputs. For systems with several inputs, each input having multiple possible values, the testing of all possible input states may be impractical or impossible.

There are a number of known methods for testing such systems.

For example, *"*Black-box Testing: techniques for functional testing of software and systems" Beizer, Boris, ISBN: 0471120944 discloses partitioning the input space of a system being tested. All the input values in a partition may then be considered to be equivalent, and only one representative value in each partition is the used to test the system to sufficiently cover the whole input space.

"The art of software testing" Myers, Glenford J., ISBN: 0471043281 discloses using one or more boundary values as representative test cases for a system. Testing methods that explore boundary conditions tend to perform better than methods that do not. However, software and digital systems may not be continuous, and therefore the testing of boundary conditions may not discover certain design defects.

"An Evaluation of Random Testing", Joe W. Duran, Simeon C. Ntafos, IEEE Transaction on Software Engineering discloses that random testing may be cost effective for many programs.

All-pairs testing, or pair-wise testing, is a combinatorial software testing method that, for each pair of input parameters of a system (typically, a software algorithm), tests all possible discrete combinations of those parameters. This tends to be faster than performing an exhaustive search of all combinations of all possible input parameters.

Modified Condition/Decision Coverage (MC/DC), is used in the standard DO-178B to ensure that Level A (Catastrophic) software is tested adequately. The technique still requires testers to develop their own test cases.

Other testing methods are known from WO2010/069587 A1, the article entitled "Effective Black-Box Testing with Genetic Algorithms" by M. Last et al. (Springer-Verlag 2006) and the article entitled "Research on software testing technique of airborne equipment based on airworthiness" by T. Feng et al. (Procedia Engineering 17 (2011), 489-496).

### SUMMARY OF THE INVENTION

In a first aspect, the present invention provides a method as defined in claim 1.

The process may be an iterative process. Also, generation of the second set of inputs may comprise performing one or more iterations of the process.

The process is a genetic algorithm.

The step of generating the second set of inputs using the selected subset of inputs may comprise performing a crossover process on the inputs in the selected subset.

The step of generating the second set of inputs using the selected subset of inputs may comprise performing a mutation process on the inputs in the selected subset.

The step of providing a set of inputs for the system may comprise stochastically sampling a plurality of inputs from an input space of the system to produce the first set of inputs.

In a further aspect, the present invention provides an apparatus as defined in claim 6.

The apparatus may be wholly onboard an aircraft.

The process may be an iterative process. Also, generation of the second set of inputs may comprise performing one or more iterations of the process.

The generation of the second set of inputs using the selected subset of inputs may comprise performing a crossover process on the inputs in the selected subset.

The generation of the second set of inputs using the selected subset of inputs may comprise performing a mutation process on the inputs in the selected subset.

In a further aspect, the present invention provides an aircraft comprising apparatus in accordance with the preceding aspect.

In a further aspect, the present invention provides a computer program or plurality of computer programs arranged such that when executed by a computer system it/they cause the computer system to operate in accordance with any of the above aspects.

In a further aspect, the present invention provides a machine readable storage medium storing a computer program or at least one of the plurality of computer programs according to the preceding aspect.

### BRIEF DESCRIPTION OF THE DRAWINGS

Figure 1 is a schematic illustration (not to scale) of an aircraft;
Figure 2 is a schematic illustration (not to scale) of a network; and
Figure 3 is a process flow-chart showing certain steps of an embodiment of a system testing algorithm.

### DETAILED DESCRIPTION

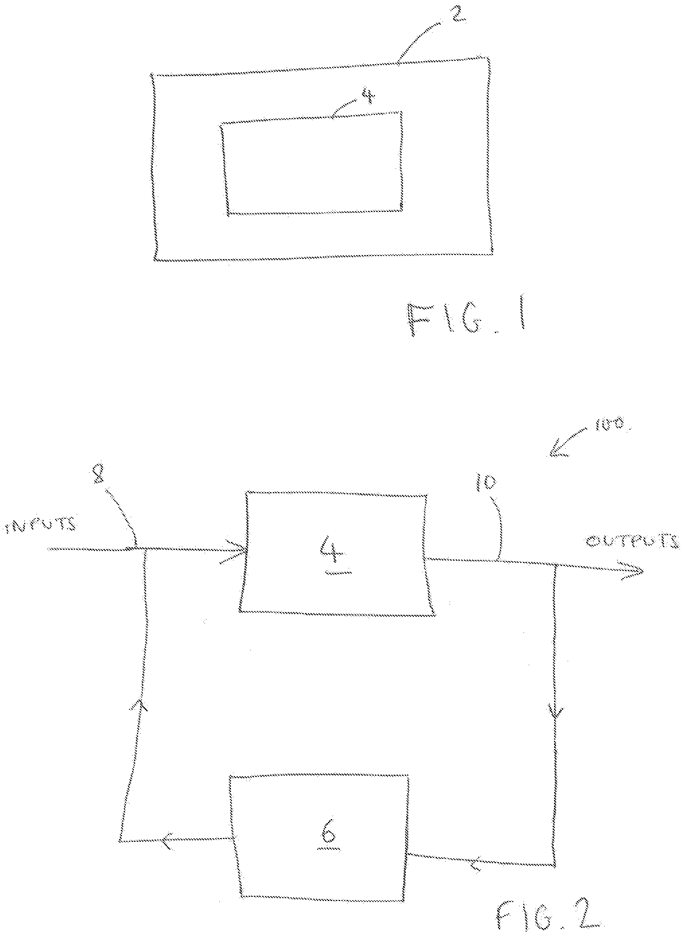

Figure 1 is a schematic illustration (not to scale) of an aircraft 2. The aircraft 2 comprises a collision avoidance system 4.

The collision avoidance system 4 is a conventional system that may operate onboard the aircraft 2 and may be independent of ground-based systems (e.g. air traffic control systems). The collision avoidance system 4 performs a collision avoidance algorithm on data received by it from other aircraft systems. The collision avoidance algorithm is a conventional algorithm.

The collision avoidance system 4 may be a black-box or white-box system. The collision avoidance system 4 operates so as to warn the pilot of the aircraft 2 of the presence of other aircraft, obstacles, or the ground, so that collision of the aircraft 2 with those other entities may be avoided. The collision avoidance system 4 may indicate to the pilot a manoeuvre that will prevent, or reduce the risk of, a collision.

The collision avoidance system 4 may operate over a relatively short range (i.e. so as to prevent, or reduce the risk of, an aircraft-on-aircraft collision), or may operate over a relatively long range (i.e. so that standard separation between aircraft during flight is substantially maintained).

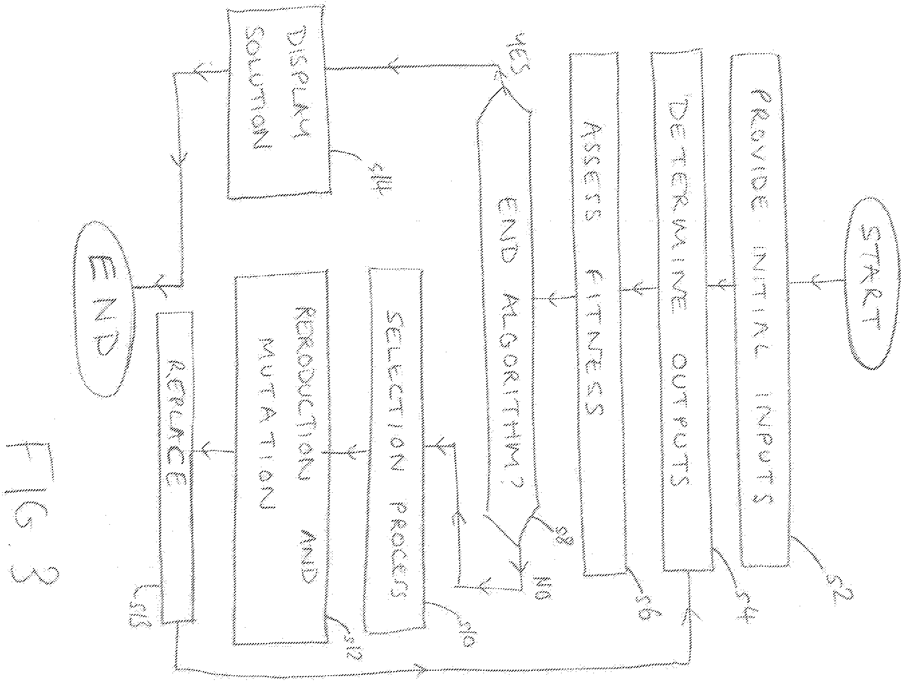

An embodiment of a system testing algorithm will be described in more detail later below with reference to Figure 3. In the embodiment, the system testing algorithm will be used to test (i.e. to discover any design defects in) the collision avoidance algorithm performed by the collision avoidance system 4.

Figure 2 is a schematic illustration (not to scale) of a network 100 in which the embodiment of the system testing algorithm is to be implemented. In some embodiments, this network 100 may be on the aircraft 2.

The network 100 comprises the collision avoidance system 4 and an input generator 6.

In this embodiment, the collision avoidance system 4 is configured to receive a plurality of inputs 8. Initially, the inputs 8 for the collision avoidance system 4 are test variables that may be set by an operator. Each of the plurality of inputs 8 may be, for example, indicative of a position and a velocity of another aircraft, object, or the ground relative to the aircraft 2.

The collision avoidance system is configured to perform the collision avoidance algorithm on the inputs 8 to generate a plurality of outputs 10. Each of the plurality of outputs 10 may be, for example, indicative of a recommended manoeuvre to be performed by the pilot, and a corresponding miss-distance between the aircraft 2 and the other aircraft, object, or the ground if that recommended manoeuvre were performed.

The collision avoidance system 4 and an input generator 6 are coupled together so that the outputs 10 of the collision avoidance system 4 are the inputs of the input generator 6.

The input generator 6 is configured to perform an input generation algorithm on the outputs 10 of the collision avoidance system 4 to form a new set of inputs 8 for the collision avoidance system 4. The input generation algorithm performed by the input generator 6 forms part of the system testing algorithm and is described in more detail later below with reference to Figure 3.

The testing of the collision avoidance algorithm may be performed onboard the aircraft 2, e.g. the network 100 may be wholly located on the aircraft 2. Alternatively, at least some of the process of the testing the collision avoidance algorithm may be performed remotely from the aircraft 2, i.e. one or more entities of the network 100 may be remote from the aircraft 2, e.g. the collision avoidance system 4 may be removed from the aircraft 2 prior to the testing of the collision avoidance algorithm.

Figure 3 is a process flow-chart showing certain steps of an embodiment of a system testing algorithm performed using the network 100.

In this embodiment, the system testing algorithm is a genetic algorithm. The system testing algorithm is used to generate inputs 8 to the collision avoidance system 4 with which the collision avoidance system 4 performs poorly. It is an aim of the system testing algorithm to generate an input 8 to the collision avoidance system 4 with which the collision avoidance system 4 performs most poorly. The system testing algorithm is an iterative optimisation process.

At step s2, a plurality of initial inputs 8 for the collision avoidance system 4 is provided. The initial inputs 8 for the collision avoidance system 4 are test variables that may be set by an operator.

Each input 8 encodes a candidate (e.g. optimal) solution to the problem of finding inputs for the collision avoidance system 4 with which the collision avoidance system 4 performs poorly, i.e. each of the inputs 8 may be an input with which the collision avoidance system demonstrates poor performance.

The initial inputs 8 form an initial population of solutions. The population may be of any appropriate size, e.g. several hundred or thousand inputs. The initial inputs 8 may be a set of inputs that have been randomly selected from the set of all possible inputs to the collision avoidance system 4, i.e. the population may be generated randomly. Alternatively, the inputs 8 may be "seeded" in areas where optimal solutions are likely to be found.

The inputs 8 may be represented, e.g., as an array of bits. Such a representation tends to be advantageously convenient as below described crossover operations tend to be facilitated. Alternatively, the inputs 8 may be represented in binary as strings of 0s and 1 s. Other representations are possible.

In the terminology typically used in the field of genetic algorithms, the inputs 8 may be referred to as chromosomes or genotypes, each of which encodes a candidate solution (also referred to as an individual, creature, or phenotype).

At step s4, the collision avoidance system 4 performs the collision avoidance algorithm on the inputs 8 to determine the outputs 10.

In this embodiment, each of the plurality of outputs 10 corresponds to a particular input 8. An output 10 may, for example, comprise a recommended manoeuvre to be performed by the pilot if the corresponding input 8 were actually observed. An output 10 may further comprise a corresponding miss-distance between the aircraft 2 and another aircraft, an object, or the ground if that recommended manoeuvre were performed.

The below described steps s6 to s14 of the system testing algorithm may, for example, be performed by the input generator 6.

At step s6, using the outputs 10, the fitness of each individual input 8 is evaluated.

In this embodiment, the fitness of an input 8 is evaluated by determining the value of a fitness function of the output 10 corresponding to that input 8. Thus, a "fitness value" is determined for each of the inputs 8.

Any appropriate fitness function may be used. The fitness function is typically dependent on the algorithm being tested.

Any appropriate performance measure or metric may be used to assess the performance of a system. A metric used may depend on the system, i.e. the type of system itself. Inputs with which a system performs "most poorly" may be indicated by certain values (e.g. lowest or highest) of the performance metric or measure used to assess the system. For example, good performance of a collision avoidance algorithm may result in a relatively large separation distance between two aircraft. Similarly, poor performance of that collision avoidance algorithm may result in a relatively small, or zero, separation distance between two aircraft. The assessment of performance of the collision avoidance algorithm may comprise simulating a collision encounter between two aircraft. Such simulation may comprise computing distances between the two aircraft. Higher distances may represent larger aircraft separation and good algorithm performance, whilst low distances may represent smaller separation and poor algorithm performance. According to the present invention, the fitness function (i.e. a function for assessing the fitness or performance of the algorithm) is a function of the distance between the two aircraft in the collision encounter.

In other examples that are not part of the present invention, a route planning algorithm may be under test. The route planning algorithm may be for computing a route, for a vehicle, between two points such that fuel use is minimised. Also, there may be a number of obstacles to be avoided. An appropriate fitness function in such examples may be a function of the amount of fuel remaining when the vehicle reaches its destination. Cases in which the route planning algorithm performs poorly may be found, for example, by finding inputs which correspond to minimum values of this fitness function.

A value of the fitness functions for a particular input 8 is indicative of how poor the performance of the collision avoidance algorithm is when performed using that input 8. For example, for an input 8, the lower the value of the fitness function (e.g. separation distance) calculated for that input 8 is, the worse the performance of the collision avoidance algorithm may be. In this case, it may be an object of the system testing process to identify inputs 8 that correspond to minimum values of the fitness function (i.e. to identify the inputs 8 with which the collision avoidance algorithm performs the worst). Also, in another example, for an input 8, the higher the value of the fitness function calculated for that input 8 is, the worse the performance of the collision avoidance algorithm may be. In this case, it may be an object of the system testing process to identify inputs 8 that correspond to maximum values of the fitness function (i.e. to identify the inputs 8 with which the collision avoidance algorithm performs the worst).

At step s8, it is determined whether the system testing algorithm is to be terminated yet.

The algorithm may be deemed to terminate when one or more appropriate conditions have been met. For example, the algorithm may terminate when a pre-determined number of generations of inputs 8 have been produced (i.e. when a pre-determined number of iterative cycles of the algorithm have been performed). Also for example, the algorithm may terminate when the value of the fitness function corresponding to one or more of the inputs 8 exceeds a threshold level. Also for example, the algorithm may terminate when an Allocated budget (computation time/money) has been reached

If at step s8 it is determined that the algorithm is not to end yet, the method proceeds to step s10.

However, if at step s8 it is determined that the algorithm is to end, the method proceeds to step s14 before ending. Step s14 will be described in more detail later below after the description of steps s10, s12, and s13.

At step s10, it has been determined that the system testing algorithm is not yet to be terminated. At step s10, a plurality of inputs 8 are selected (e.g. stochastically) from the current set of inputs 8. In other words, a subset of the set of inputs 8 is selected e.g. at random.

In this embodiment, this selection of a subset of the inputs 8 is performed depending upon the respective calculated fitness values of the inputs 8. In particular, individual inputs 8 are selected through a fitness-based process, where fitter solutions (as measured by the fitness function) are typically more likely to be selected. For example, if relatively lower fitness values correspond to relative worse performance of the collision avoidance algorithm, an input 8 would be more likely to be selected at step s10 if it corresponded to a lower fitness value than if it corresponded to a higher fitness value.

Any appropriate selection process may be used. For example, a selection process in which the fitness of each of the inputs 8 is used to preferentially select the fittest inputs may be used. Alternatively, a selection process in which only a random sample of the population is selected from may be used. Alternatively, a fitness proportionate selection (or roulette-wheel selection) process, a stochastic universal sampling process, a tournament selection process, a truncation selection process, or an elitist selection process may be used.

At step s12, the selected inputs 8 are modified to form a new population, i.e. a new set of inputs 8 for the collision avoidance system 4. In this embodiment, modification of the selected inputs 8 comprises the recombination and the mutation of certain of the selected inputs 8

In other words, at step s12 a next generation population of inputs 8 is produced from those inputs 8 selected. In this embodiment, this production of the next generation population is performed using genetic operators, namely crossover (also called recombination) and mutation operators.

Typically, a crossover operator is used to produce a new input 8 from two (or more) "parent" inputs 8 that have been selected from the set of inputs selected at step s10. The new input 8 determined using the parent inputs 8 may be thought of as a "child" input/solution.

Any appropriate crossover techniques may be used. For example, a one-point crossover process, a two-point crossover process, a "cut and splice" crossover process, a uniform crossover process, a half uniform crossover process, a three parent crossover process may be used, a "crossover for ordered chromosomes" process may be used. Also, for example a crossover process that uses any or all of the following crossover operators may be used: a partially-matched crossover operator, a cycle crossover operator, an order-based crossover operator, a position-based crossover operator, a voting recombination crossover operator, an alternating-position crossover operator, a sequential constrictive crossover operator. Other possible methods include the edge recombination operator and partially mapped crossover.

Typically, a mutation process is performed to alter one or more gene values in a chromosome from its initial state (i.e. to change one or more bit-values of an input 8). For example, if inputs 8 are in binary as strings of 0s and 1s, a 1 value may be changed, at random, to a 0 value (and vice versa). This mutation may occur depending upon a pre-defined mutation probability. Preferably, this mutation probability is low.

Any appropriate mutation techniques may be used. For example, a single point mutation process, an inversion mutation process, a floating point mutation process, a bit string mutation process, may be used. Alternatively, a mutation process that uses some or all of the following mutation operators may be used: a flip bit mutation operator, a boundary mutation operator, a non-uniform mutation operator, uniform mutation operator replaces, and/or a Gaussian mutation operator.

The crossover and mutation process performed on the inputs 8 that were selected at step s10 produce a next generation population of inputs 8 from a previous generation. Advantageously, the average fitness of the produced next generation of inputs 8 tends to be improved relative to the previous generation.

In other embodiments, only one of the crossover or mutation operators is used to produce the new generation of inputs 8. Also, in other embodiments, genetic operators other than crossover and mutation operators (for example, regrouping, colonization-extinction, or migration genetic operators) may be used may be used instead of or in addition to one or both of the crossover and mutation operators.

At step s13, the previous inputs 8 are replaced by the new (i.e. the latest) inputs 8. In other words, the previous generation population is replaced by the new generation population that has been determined at step s12.

After the performance of step s13, the method of figure 3 reverts back to step s4. Thus, the process of Figure 3 is an iterative process.

Referring back to step s8, if at step s8 it is determined that the algorithm is to end, the method proceeds to step s14

At step s14, the latest (i.e. most recent generation) of inputs 8 are displayed (e.g. on a display) to an operator (i.e. a party performing the testing of the collision avoidance algorithm).

Thus, a system testing algorithm is provided.

The system testing algorithm advantageously tends to discover any design defects in the algorithm/system being tested (i.e. the collision avoidance algorithm performed by the collision avoidance system). The design defects may be displayed to the tester as input values that the system being tested performs poorly when input with. The corresponding output values and fitness values corresponding to those input values may also be displayed to the tester. The finding of these defects allows a tester to analyse the performance of the system/algorithm being tested and better understanding of the capabilities and limitations of the software and systems. The system/algorithm may be modified, updated, or changed so as to overcome or alleviate the effects of the discovered/determined deficiencies. Thus, the design of better software and systems tends to be facilitated.

The above described method and apparatus for testing systems and software tend to be particularly useful for testing avionics/aircraft software, and in particular avionics/aircraft software having several inputs, each input having multiple possible values. This is because avionics/aircraft software tends to be relatively complex and conventional testing methods tend to be impractical or impossible.

The above described method and apparatus for testing systems and software tend to be particularly useful for testing black box systems as knowledge of the internal workings of the system tend not to be needed. The provided methods and apparatus may also be used to test white box systems.

The above described system is a test case generation system that uses an optimisation technique to iteratively create test cases for a system under test. Advantageously, the test case generation system is capable of generating a test case that demonstrates poor performance of the system under test. Also, the test case that demonstrates the poor performance of the system under test is advantageously without an exhaustive search of the input space of the system under test having to be performed.

Advantageously, portioning of the input space does not need to be performed.

Advantageously, manual creation of test cases by a tester does not need to be performed.

Advantageously, an initial set of test cases, e.g. randomly selected inputs from the input space, tend to evolve to become those system inputs with which the system under test exhibits poor performance. Thus, design weakness tends to be discovered.

Advantageously, the above described method and apparatus may be used in the certification of systems, e.g. to gather certification evidence.

Advantageously, the above described method and apparatus may be used to test non-deterministic and/or autonomous systems.

Apparatus, including the input generator and/or the collision avoidance system, for implementing the above arrangement, and performing the method steps described herein, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

It should be noted that certain of the process steps depicted in the flowchart of Figure 3 and described above may be omitted or such process steps may be performed in differing order to that presented above and shown in Figure 3. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the system testing algorithm is used to generate inputs to a collision avoidance system with which the collision avoidance system performs poorly. However, in other examples that are not part of the present invention the system testing algorithm is used to generate inputs for a different type of algorithm. For example, the system testing algorithm is used to test software/algorithms of different aircraft/avionics systems e.g. route planning systems, decision making systems used on aircraft. The system testing algorithm may be used to test a non-deterministic system. The system testing algorithm may be used to test a commercially available black-box system.

In the above embodiments, the system testing algorithm is a genetic algorithm. The genetic algorithm is used to optimise values of a fitness function. The value of the fitness function corresponding to a particular algorithm input is indicative of how poorly the algorithm under test performs when performed using that particular input. However, in other examples that are not part of the present invention, a different method of optimising the values of the fitness function may be used. For example, a different genetic algorithm implemented in a different appropriate way may be used. Also for example, a different type of evolutionary algorithm, or a multiple objective evolutionary algorithm, may be used to optimise the fitness values. In other examples a simulated annealing process may be used to optimise the fitness values. In other examples a neural network may be used to optimise the fitness values.

## Claims

1. A method of testing an aircraft collision avoidance system (4), the system (4) being configured to process an input (8) to produce an output (10), the method comprising:
providing a set of inputs (8) for the system (4);
at least once performing a genetic algorithm, thereby generating a new set of inputs, the genetic algorithm comprising steps (i) to (iv) wherein:
step (i) comprises, for each input (8), processing, using the system (4), that input (8) to produce a corresponding output (10);
step (ii) comprises, for each input (8), determining, using one or more processors (6) operatively coupled to the system (4), for the output (10) that corresponds to that input (8), an aircraft separation distance;
step (iii) comprises selecting a subset of the inputs (8) that correspond to minimum separation distances; and
step (iv) comprises, using the selected subset of inputs (8) generating, by the one or more processors (6), a new set of inputs (8); and
thereafter, displaying the most recent generation of inputs (8).

2. A method according to claim 1, wherein steps (i) to (iv) of the genetic algorithm are performed iteratively.

3. A method according to claim 1 or 2, wherein step (iv) comprises performing a mutation process on the selected subset of the inputs (8).

4. A method according to any of claim 1 to 3, wherein the step of providing a set of inputs (8) for the system (4) comprises stochastically sampling a plurality of inputs (8) from an input space of the system (4) to produce the set of inputs (8).

5. A method according to any of claims 1 to 4, wherein:
the set of inputs (8) is represented as an array of bits; and
generating the new set of inputs (8) comprises performing a crossover process.

6. Apparatus comprising:
an aircraft collision avoidance system (4), the system (4) being configured to process an input (8) to produce an output (10); and
one or more processors (6) operatively coupled to the system (4) and configured to:
provide a set of inputs (8) for the system (4);
at least once perform a genetic algorithm, thereby generating a new set of inputs, the genetic algorithm comprising steps (i) to (iv) wherein:
step (i) comprises, for each input (8), processing, using the system (4), that input (8) to produce a corresponding output (10);
step (ii) comprises, for each input (8), determining, using one or more processors (6) operatively coupled to the system (4), for the output (10) that corresponds to that input (8), an aircraft separation distance;
step (iii) comprises selecting a subset of the inputs (8) that correspond to minimum separation distances; and
step (iv) comprises, using the selected subset of inputs (8), generating, by the one or more processors (6), a new set of inputs (8); and
thereafter, displaying the most recent generation of inputs (8).

7. An aircraft (2) comprising apparatus in accordance with claim 6.

8. A computer program or plurality of computer programs arranged such that when executed by a computer system it/they cause the computer system to operate in accordance with the method of any of claims 1 to 5.

9. A machine readable storage medium storing the computer program or the plurality of computer programs according to claim 8.

## Patentansprüche

1. Verfahren zum Testen eines Systems zur Vermeidung von Flugzeugkollisionen (4), wobei das System (4) konfiguriert ist, um einen Eingang (8) zu verarbeiten, um einen Ausgang (10) zu erzeugen, das Verfahren umfassend:
Bereitstellen eines Satzes von Eingängen (8) für das System (4);
mindestens einmaliges Durchführen eines genetischen Algorithmus, wodurch ein neuer Satz von Eingängen erzeugt wird, wobei der genetische Algorithmus die Schritte (i) bis (iv) umfasst, wobei:
Schritt (i) für jeden Eingang (8) das Verarbeiten, unter Verwendung des Systems (4), dieses Eingangs (8) umfasst, um einen entsprechenden Ausgang (10) zu erzeugen;
Schritt (ii) für jeden Eingang (8), unter Verwendung eines oder mehrerer an das System (4) operativ gekoppelter Prozessoren (6), das Bestimmen für den Ausgang (10), der diesem Eingang (8) entspricht, eines Trennungsabstands für Flugzeuge umfasst;
Schritt (iii) das Auswählen einer Teilmenge der Eingänge (8) umfasst, die den minimalen Trennungsabständen entsprechen; und
Schritt (iv), unter Verwendung der ausgewählten Teilmenge von Eingängen (8), das Generieren, durch den einen oder die mehreren Prozessoren (6), eines neuen Satzes von Eingängen (8) umfasst; und
anschließend das Anzeigen der neuesten Generation von Eingängen (8).

2. Verfahren nach Anspruch 1, wobei die Schritte (i) bis (iv) des genetischen Algorithmus iterativ durchgeführt werden.

3. Verfahren nach Anspruch 1 oder 2, wobei Schritt (iv) das Durchführen eines Mutationsprozesses für die ausgewählte Teilmenge der Eingänge (8) umfasst.

4. Verfahren nach einem der Ansprüche 1 bis 3, wobei der Schritt des Bereitstellens eines Satzes von Eingängen (8) für das System (4) das stochastische Abtasten einer Vielzahl von Eingängen (8) aus einem Eingangsraum des Systems (4) umfasst, um den Satz von Eingängen (8) zu erzeugen.

5. Verfahren nach einem der Ansprüche 1 bis 4, wobei:
der Satz von Eingängen (8) als ein Feld von Bits dargestellt wird; und
das Generieren eines neuen Satzes von Eingängen (8) das Durchführen eines Überkreuzungsprozesses umfasst.

6. Vorrichtung, umfassend:
ein System zur Vermeidung von Flugzeugkollisionen (4), wobei das System (4) konfiguriert ist, um einen Eingang (8) zu verarbeiten, um einen Ausgang (10) zu erzeugen; und
einen oder mehrere Prozessoren (6), die operativ mit dem System (4) gekoppelt sind und konfiguriert sind, um:
einen Satz von Eingängen (8) für das System (4) bereitzustellen;
einen genetischen Algorithmus mindestens einmal durchzuführen, wodurch ein neuer Satz von Eingängen erzeugt wird, wobei der genetische Algorithmus die Schritte (i) bis (iv) umfasst, wobei:
Schritt (i) für jeden Eingang (8) das Verarbeiten, unter Verwendung des Systems (4), dieses Eingangs (8) umfasst, um einen entsprechenden Ausgang (10) zu erzeugen;
Schritt (ii) für jeden Eingang (8), unter Verwendung eines oder mehrerer an das System (4) operativ gekoppelter Prozessoren (6), das Bestimmen für den Ausgang (10), der diesem Eingang (8) entspricht, eines Trennungsabstands für Flugzeuge umfasst;
Schritt (iii) das Auswählen einer Teilmenge der Eingänge (8) umfasst, die den minimalen Trennungsabständen entsprechen; und
Schritt (iv), unter Verwendung der ausgewählten Teilmenge von Eingängen (8), das Generieren, durch den einen oder die mehreren Prozessoren (6), eines neuen Satzes von Eingängen (8) umfasst; und
anschließend das Anzeigen der neuesten Generation von Eingängen (8).

7. Flugzeug (2), umfassend eine Vorrichtung nach Anspruch 6.

8. Computerprogramm oder Vielzahl von Computerprogrammen, das bzw. die so angeordnet sind, dass sie bei Ausführung durch ein Computersystem das Computersystem zum Betrieb gemäß dem Verfahren nach einem der Ansprüche 1 bis 5 veranlassen.

9. Maschinenlesbares Speichermedium, welches das Computerprogramm oder die Vielzahl von Computerprogrammen gemäß Anspruch 8 speichert.

## Revendications

1. Procédé de test d'un système anticollision pour avions (4), le système (4) étant configuré pour traiter une entrée (8) de façon à produire une sortie (10), le procédé comprenant :
la prévision d'un ensemble d'entrées (8) pour le système (4) ;
l'exécution au moins une fois d'un algorithme génétique, pour ainsi générer un nouvel ensemble d'entrées, l'algorithme génétique comprenant les étapes (i) à (iv) dans lesquelles :
l'étape (i) comprend, pour chaque entrée (8), le traitement de cette entrée (8), à l'aide du système (4), pour produire une sortie correspondante (10) ;
l'étape (ii) comprend, pour chaque entrée (8), la détermination, à l'aide d'un ou plusieurs processeurs (6) couplés fonctionnellement au système (4), pour la sortie (10) qui correspond à cette entrée (8), d'une distance de séparation des avions ;
l'étape (iii) comprend la sélection d'un sous-ensemble des entrées (8) qui correspondent aux distances de séparation minimales ; et
l'étape (iv) comprend la génération, à l'aide du sous-ensemble d'entrées (8) sélectionné, par le ou les processeurs (6), d'un nouvel ensemble d'entrées (8) ;
puis, affichage de la génération d'entrées (8) la plus récente.

2. Procédé selon la revendication 1, dans lequel les étapes (i) à (iv) de l'algorithme génétique sont exécutées de manière itérative.

3. Procédé selon la revendication 1 ou 2, dans lequel l'étape (iv) comprend l'exécution d'un processus de mutation sur le sous-ensemble d'entrées (8) sélectionné.

4. Procédé selon l'une quelconque des revendications 1 à 3, dans lequel l'étape de prévision d'un ensemble d'entrées (8) pour le système (4) comprend un échantillonnage stochastique d'une pluralité d'entrées (8) à partir d'un espace d'entrée du système (4) pour produire l'ensemble d'entrées (8).

5. Procédé selon l'une quelconque des revendications 1 à 4, dans lequel :
l'ensemble d'entrées (8) est représenté sous la forme d'une matrice de bits ; et
la génération du nouvel ensemble d'entrées (8) comprend l'exécution d'un processus de croisement.

6. Appareil comprenant :
un système anticollision pour avions (4), le système (4) étant configuré pour traiter une entrée (8) de façon à produire une sortie (10) ; et
un ou plusieurs processeurs (6) couplés fonctionnellement au système (4) et configurés pour :
prévoir un ensemble d'entrées (8) pour le système (4) ; exécuter au moins une fois un algorithme génétique, pour ainsi générer un nouvel ensemble d'entrées, l'algorithme génétique comprenant les étapes (i) à (iv) dans lesquelles :
l'étape (i) comprend, pour chaque entrée (8), le traitement de cette entrée (8), à l'aide du système (4), pour produire une sortie correspondante (10) ;
l'étape (ii) comprend, pour chaque entrée (8), la détermination, à l'aide d'un ou plusieurs processeurs (6) couplés fonctionnellement au système (4), pour la sortie (10) qui correspond à cette entrée (8), d'une distance de séparation des avions ;
l'étape (iii) comprend la sélection d'un sous-ensemble des entrées (8) qui correspondent aux distances de séparation minimales ; et
l'étape (iv) comprend la génération, à l'aide du sous-ensemble d'entrées (8) sélectionné, par le ou les processeurs (6), d'un nouvel ensemble d'entrées (8) ;
puis, affichage de la génération d'entrées (8) la plus récente.

7. Avion (2) comprenant un appareil selon la revendication 6.

8. Programme informatique ou pluralité de programmes informatiques conçus pour, lorsqu'ils sont exécutés par un système informatique, faire en sorte que le système informatique fonctionne suivant le procédé selon l'une quelconque des revendications 1 à 5.

9. Support de stockage lisible par une machine stockant le programme informatique ou la pluralité de programmes informatiques selon la revendication 8.
